# EUROPÄISCHE PATENTSCHRIFT

(11) **EP 1 106 402 B1**
(45) Veröffentlichungstag und Bekanntmachung des Hinweises auf die Patenterteilung: **02.05.2003**
(21) Anmeldenummer: 00126740.0
(22) Anmeldetag: 06.12.2000
(51) Int. Cl.: B60G 17/052

(54) **Geschlossene Niveauregeleinrichtung für Fahrzeuge**
Closed height control device for vehicles
Dispositif fermé de réglage du niveau pour véhicules

(30) Priorität: 10.12.1999 DE 19959556
(43) Veröffentlichungstag der Anmeldung: 13.06.2001
(73) Patentinhaber: Continental Aktiengesellschaft, 30165 Hannover (DE)
(72) Erfinder: Behmenburg, Christof, Dr., 31867 Lauenau (DE); Westerkamp, Helge, 30171 Hannover (DE)

(56) Entgegenhaltungen:
- DE-A- 3 339 080
- US-A- 4 695 074
- US-A- 4 834 418
- US-A- 5 452 919
- PATENT ABSTRACTS OF JAPAN vol. 005, no. 065 (M-066), 30. April 1981 (1981-04-30) & JP 56 018137 A (ATSUGI MOTOR PARTS CO LTD), 20. Februar 1981 (1981-02-20)
- PATENT ABSTRACTS OF JAPAN vol. 005, no. 002 (M-049), 9. Januar 1981 (1981-01-09) & JP 55 136611 A (ATSUGI MOTOR PARTS CO LTD), 24. Oktober 1980 (1980-10-24)
- PATENT ABSTRACTS OF JAPAN vol. 011, no. 272 (M-622), 4. September 1987 (1987-09-04) & JP 62 074704 A (MAZDA MOTOR CORP), 6. April 1987 (1987-04-06)
- PATENT ABSTRACTS OF JAPAN vol. 013, no. 535 (M-899), 29. November 1989 (1989-11-29) & JP 01 218911 A (KAYABA IND CO LTD), 1. September 1989 (1989-09-01)

## Beschreibung

Die Erfindung betrifft eine geschlossene Niveauregeleinrichtung für Fahrzeuge nach dem Oberbegriff des Anspruchs 1.

Eine derartige Niveauregelanlage ist aus der US-Patentschrift mit der Nummer US 4 834 418 bekannt, welche eine geschlossene Niveauregelanlage für Fahrzeuge mit einem elektrisch betriebenen Kompressor und einem elektronischen Steuergerät zur Steuerung und/oder Regelung der Anlage. Mit Hilfe des Kompressors kann Druckmittel aus einem oder zwei Druckmittelspeichern in die einzelnen Luftfedern und umgekehrt gefördert werden. Dazu wird der Eingang des Kompressors über steuerbare Wegeventile . mit einem oder beiden Druckmittelspeichern und der Ausgang des Kompressors mit der bzw. den jeweiligen Luftfeder(n) über steuerbare Wegeventile verbunden. Soll dagegen Druckmittel von der oder den Luftfeder(n) in den oder die Druckmittelspeicher gefördert werden, dann wird der Eingang des Kompressors über steuerbare Wegeventile mit der bzw. den jeweiligen Luftfeder(n) und der Ausgang des Kompressors mit einem oder beiden Druckmittelspeichern über steuerbare Wegeventile verbunden. Um den Druck in den jeweiligen Luftfedern bzw. den Druckmittelspeichern ermitteln zu können; ist jeder Luftfeder genau ein Drucksensor und jedem Druckmittelspeicher mindestens ein Drucksensor zugeordnet. Die Drucksensoren sind direkt, ohne eine dazwischenliegendes Ventil oder dergleichen, über eine Druckmittelleitung mit den jeweiligen Luftfedern bzw. Druckmittelspeichern verbunden.

Weiterhin ist eine Luftfederungsanlage aus der DE 33 39 080 A1 bekannt. Die dort beschriebene Luftfederungsanlage hat den Vorteil, dass nur ein Druckluftvorratbehälter benötigt wird, in den mit Hilfe der Pumpe Luft aus den Luftfedern gefördert wird bzw. aus dem Luft in die Luftfedern gefördert wird. Die Luftfederungsanlage ist jedoch so aufgebaut, dass die Pumpe in zwei Richtungen fördern können muss, was einen aufwendigen Aufbau der Pumpe zur Folge hat.

Der Erfindung liegt die Aufgabe zugrunde, eine geschlossene Niveauregeleinrichtung zu schaffen, in der der Druck sowohl in dem Druckmittelvorratsbehälter als auch der Druck in den Druckmittelkammern von einem einzigen Drucksensor gemessen werden kann.

Die Aufgabe wird gemäß den Merkmalen des Anspruchs 1 gelöst.

Der mit der Erfindung erzielte Vorteil ist insbesondere darin zu sehen, dass die gemessenen Druckwerte eines einzigen Drucksensors ausreichen, um beurteilen zu können, ob bei der Förderung von Druckmittel aus dem Druckmittelvorratsbehälter in eine Druckmittelkammer oder umgekehrt die Pumpe fördern muss. Wie dies im einzelnen geschieht, wird in der Figurenbeschreibung näher erläutert. Dies ist dann notwendig, wenn in der gewünschten Strömungsrichtung des Druckmittels kein Druckgefälle vorliegt.

Gemäß einem Ausführungsbeispiel der Erfindung nach Anspruch 2 weist die Niveauregeleinrichtung zwei steuerbare Wegeventile auf, über die die Druckmittelleitungen geführt werden. Eines der steuerbaren Wegeventile ist am Eingang und das andere steuerbare Wegeventil ist am Ausgang der Pumpe angeordnet. Der Vorteil dieser Weiterbildung ist darin zu sehen, dass die Anzahl der steuerbaren Wegeventile und damit ihre Kosten so niedrig wie möglich gehalten werden.

Gemäß einem alternativen Ausführungsbeispiel der Erfindung nach Anspruch 3 enthält die Niveauregeleinrichtung zwei steuerbare Wegeventile und ein Wechselventil. Die Druckmittellleitungen, die zeitweise mit dem Eingang der Pumpe verbunden sind, werden über das erste bzw. zweite steuerbare Wegeventil am Eingang der Pumpe geführt, und die Druckmittelleitungen, die zeitweise mit dem Ausgang der Pumpe verbunden sind, werden auf unterschiedliche Eingänge des Wechselventils geführt, das sich am Ausgang der Pumpe befindet.

Gemäß einer Weiterbildung des zweiten Ausführungsbeispiels nach Anspruch 4 ist die von dem Druckmittelvorratbehälter ausgehende Druckmittelleitung, die mit dem Eingang der Pumpe verbindbar ist, direkt mit der von der Druckmittelkammer ausgehenden Druckmittelleitung, die mit dem Eingang der Pumpe verbindbar ist, verbunden, wenn sich beide steuerbaren Wegeventile gleichzeitig im Schaltzustand befinden. Der Vorteil dieser Weiterbildung ist darin zu sehen, dass Luft direkt (d.h., ohne dass sie durch die Pumpe geführt wird) von dem Druckmittelvorratbehälter in die Druckmittelkammer überführt werden kann, wenn der Druck des Druckmittels in dem Druckmittelvorratbehälter größer ist als in der Druckkammer. Entsprechendes gilt für die umgekehrte Richtung.

Gemäß einer Weiterbildung der Erfindung nach Anspruch 5 ist der Eingang der Pumpe über ein steuerbares Ventil mit einem externen (also nicht zur Niveauregeleinrichtung gehörenden) Druckmittelreservoir und eine von dem Druckmittelvorratbehälter ausgehende Druckmittelleitung mit dem Ausgang der Pumpe verbunden, wenn der Druckmittelvorratbehälter aus dem externen Druckmittelreservoir mittels der Pumpe aufgefüllt wird. Der Vorteil dieser Weiterbildung ist darin zu sehen, dass Druckmittelverluste in dem Druckmittelvorratbehälter (z.B. aufgrund einer Leckage) ausgeglichen werden können, indem Druckmittel aus dem Druckmittelreservoir mit Hilfe der Pumpe in den Druckmittelvorratbehälter gefördert wird. Auch hierbei fördert die Pumpe vom Eingang zum Ausgang.

Gemäß einer Weiterbildung der Erfindung nach Anspruch 6 sind die steuerbaren Wegeventile als elektrisch steuerbare Wegeventile ausgebildet. Der Vorteil dieser Weiterbildung ist darin zu sehen, dass elektrisch steuerbare Wegeventile als preiswerte Standardbauteile zur Verfügung stehen.

Gemäß einem alternativen Ausführungsbeispiel der Erfindung nach Anspruch 3 enthält die Niveauregeleinrichtung zwei steuerbare Wegeventile und ein Wechselventil. Die Druckmittellleitungen, die zeitweise mit dem Eingang der Pumpe verbunden sind, werden über das erste bzw. zweite steuerbare Wegeventil am Eingang der Pumpe geführt, und die Druckmittelleitungen, die zeitweise mit dem Ausgang der Pumpe verbunden sind, werden auf unterschiedliche Eingänge des Wechselventils geführt, das sich am Ausgang der Pumpe befindet.

Gemäß einer Weiterbildung des zweiten Ausführungsbeispiels nach Anspruch 4 ist die von dem Druckmittelvorratbehälter ausgehende Druckmittelleitung, die mit dem Eingang der Pumpe verbindbar ist, direkt mit der von der Druckmittelkammer ausgehenden Druckmittelleitung, die mit dem Eingang der Pumpe verbindbar ist, verbunden, wenn sich beide steuerbaren Wegeventile gleichzeitig im Schaltzustand befinden. Der Vorteil dieser Weiterbildung ist darin zu sehen, dass Luft direkt (d.h., ohne dass sie durch die Pumpe geführt wird) von dem Druckmittelvorratbehälter in die Druckmittelkammer überführt werden kann, wenn der Druck des Druckmittels in dem Druckmittelvorratbehälter größer ist als in der Druckkammer. Entsprechendes gilt für die umgekehrte Richtung.

Gemäß einer Weiterbildung der Erfindung nach Anspruch 5 ist der Eingang der Pumpe über ein steuerbares Ventil mit einem externen (also nicht zur Niveauregeleinrichtung gehörenden) Druckmittelreservoir und eine von dem Druckmittelvorratbehälter ausgehende Druckmittelleitung mit dem Ausgang der Pumpe verbunden, wenn der Druckmittelvorratbehälter aus dem externen Druckmittelreservoir mittels der Pumpe aufgefüllt wird. Der Vorteil dieser Weiterbildung ist darin zu sehen, dass Druckmittelverluste in dem Druckmittelvorratbehälter (z.B. aufgrund einer Leckage) ausgeglichen werden können, indem Druckmittel aus dem Druckmittelreservoir mit Hilfe der Pumpe in den Druckmittelvorratbehälter gefördert wird. Auch hierbei fördert die Pumpe vom Eingang zum Ausgang.

Gemäß einer Weiterbildung der Erfindung nach Anspruch 6 sind die steuerbaren Wegeventile als elektrisch steuerbare Wegeventile ausgebildet. Der Vorteil dieser Weiterbildung ist darin zu sehen, dass elektrisch steuerbare Wegeventile als preiswerte Standardbauteile zur Verfügung stehen.

Ein Ausführungsbeispiel und weitere Vorteile der Erfindung werden im Zusammenhang mit den nachstehenden Figuren erläutert, darin zeigt:
Fig. 1 eine geschlossene Niveauregeleinrichtung in schematischer Darstellung
Fig. 2 eine geschlossene Niveauregeleinrichtung in schematischer Darstellung.

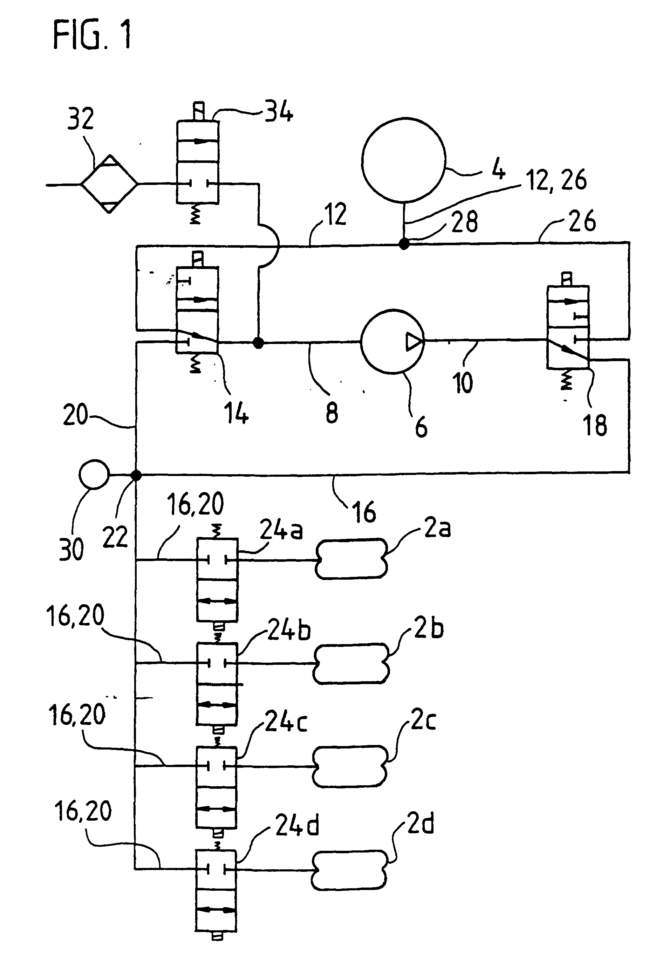

Fig. 1 zeigt eine geschlossene Niveauregeleinrichtung in Form einer Luftfederungsanslage für Kraftfahrzeuge in schematischer Darstellung. Die Luftfederungsanlage weist Druckmittelkammern in Form von Luftfedern 2a bis 2d auf. Darüber hinaus weist die Luftfederungsanlage einen Druckmittelvorratbehälter in Form eine Druckluftbehälters 4 auf. Femer enthält die Luftfederungsanlage eine Pumpe in Form eines Kompressors 6, der zumindest Druckluft von seinem Eingang 8 zu seinem Ausgang 10 befördern kann. Von dem Druckluftbehälter 4 geht eine erste Druckluftleitung 12 aus, die über erstes elektrisch steuerbares 3/2-Wegeventil 14 mit dem Eingang 8 des Kompressors 6 verbunden werden kann. In diesem Fall befindet sich das 3/2-Wegeventil 14 in seinem ersten Schaltzustand so wie es auch in der Fig. 1 gezeigt ist. Von den Luftfedern 2a bis 2d geht eine zweite Druckluftleitung 16 aus, die über ein zweites elektrisch steuerbares 3/2-Wegeventil 18 mit dem Ausgang 10 des Kompressors 6 verbunden werden kann. Das zweite steuerbare 3/2-Wegeventil 18 nimmt in diesem Fall seinen Schaltzustand ein, so wie es auch in der Fig. 1 gezeigt ist.

Von den Luftfedern 2a bis 2d geht eine dritte Druckmittelleitung 20 aus, die über das erste elektrisch steuerbare Wegeventil 14 mit dem Eingang 8 des Kompressors 6 verbindbar ist. Das Wegeventil 14 befindet sich dann im zweiten Schaltzustand. Die zweite Druckluftleitung 16 und die dritte Druckluftleitung 20 werden bevorzugt in einem Punkt 22 zusammengeführt und von dort aus über steuerbare 2/2-Wegeventile 24a bis 24d gemeinsam auf jede der Luftfedern 2 a bis 2d geführt.

Von dem Druckluftbehälter 4 geht eine vierte Druckluftleitung 26 aus, die über das zweite elektrisch steuerbare Wegeventil 18, das sich dann im zweiten Schaltzustand befindet, mit dem Ausgang 10 des Kompressors 6 verbunden werden kann. Die erste Druckluftleitung 12 und die vierte Druckluftleitung 26 werden bevorzugt in einem Punkt 28 zusammengeführt und von dort gemeinsam zu dem Drucktuftbehälter 4 geführt.

Im folgenden wird erläutert, wie Luft aus dem Druckluftbehälter 4 mittels des Kompressors 6 in die Luftfeder 2a gefördert werden kann. Dazu werden das erste elektrisch steuerbare Wegeventil 14 und das zweite steuerbare Wegeventil 18 in dem in der Fig. 1 gezeigten ersten Schaltzustand belassen bzw. in diesen überführt, indem ihre Steuereingänge bestromt werden. Ferner wird der Steuereingang des elektrisch steuerbaren Wegeventils 24a bestromt, so dass dieser von dem in der Fig. 1 gezeigten Grundzustand in den Schaltzustand übergeht. Die erste Druckluftleitung 12 ist dann mit dem Eingang 8 und die zweite Druckluftleitung 16 ist dann mit dem Ausgang 10 des Kompressors 6 verbunden. Andererseits ist die erste Druckluftleitung 12 mit dem Druckluftbehälter 4 und die zweite Druckluftleitung 16 mit der Luftfeder 2a verbunden. Schließlich wird durch ein elektrisches Signal der Kompressor 6 angesteuert, so dass dieser Luft vom Eingang 8 zum Ausgang 10 und somit vom dem Druckluftbehälter 4 in die Luftfeder 2a fördert. Soll der Fördervorgang beendet werden, so wird der Kompressor 6 wiederum angesteuert, so dass er aufhört zu fördern. Darüber hinaus wird der elektrische Steuereingang des steuerbaren Wegeventils 24a nicht mehr bestromt, so dass dieses von seinem Schaltzustand wieder in den in der Fig. 1 gezeigten Grundzustand übergeht. Die Bestromung der Steuereingänge der Wegeventile und die Abgabe der Signale an den Kompressor erfolgt durch die (in der Fig. 1 nicht gezeigten) Steuereinrichtung der Luftfederungsanlage. Dies gilt auch für die folgenden Beispiele.

Wie oben erläutert, kann Druckluft auch von dem Druckluftbehälter 4 in die Luftfedern 2b bis 2d gefördert werden, anstatt des Wegeventils 24a ist dann lediglich das entsprechende Wegeventil 24b bis 24d zu schalten.

Im Folgenden wird erläutert, wie mit Hilfe des Kompressors 6 Druckluft aus der Luftfeder 2a in den Druckluftbehälter 4 gefördert werden kann. Zunächst wird das erste und zweite elektrisch steuerbare Wegeventil 14 bzw. 18 durch Bestromung des Steuereinganges von dem in der Fig. 1 gezeigten ersten Schaltzustand in den zweiten Schaltzustand überführt. Darüber hinaus wird durch Bestromung des Steuereinganges des elektrisch steuerbaren Wegeventils 24a dieses von seinem in der Fig. 1 gezeigten Grundzustand in den Schaltzustand überführt. In diesem Fall ist die dritte Druckluftleitung 20 einerseits mit dem Eingang 8 des Kompressors 6 und andererseits mit der Luftfeder 2a verbunden. Darüber hinaus ist die vierte Druckluftleitung 26 einerseits mit dem Ausgang 10 des Kompressors 6 und andererseits mit dem Druckluftbehälter 4 verbunden. Sind die genannten Verbindungen hergestellt, wird auf den Kompressor 6 eine Steuersignal gegeben, so dass dieser beginnt, Druckluft vom Eingang 8 zum Ausgang 10 und damit von der Luftfeder 2a in den Druckluftspeicher 4 zu fördern. Soll keine Druckluft mehr aus der Luftfeder 2a abgelassen werden, d.h. in den Druckluftbehälter 4 gefördert werden, so wird der Kompressor 6 wiederum angesteuert, so dass er anhält und keine Druckluft mehr fördert. Schließlich wird der elektrische Steuereingang des steuerbaren Wegeventils 24a nicht mehr bestromt, so dass dieses wieder in den in Fig. 1 gezeigten Grundzustand übergeht.

Wie oben erläutert, kann Druckluft auch aus den Luftfedern 2b bis 2d in den Druckluftbehälter 4 abgelassen werden, anstatt des Wegeventils 24a ist dann lediglich das entsprechende Wegeventil 24b bis 24d zu schalten.

Zusätzlich zu den bisher erläuterten Bestandteilen kann die Luftfederungsanlage über einen Drucksensor 30 verfügen, mit dem der Luftdruck im Punkt 22, in dem die zweite und dritte Druckluftleitung 16 und 20 zusammengeführt sind, gemessen werden kann. Zunächst wird erläutert, wie mit Hilfe des Drucksensors 30 der Druck im Druckluftbehälter 4 messbar ist. Dazu nimmt das erste elektrisch steuerbare Wegeventil 14 und das zweite elektrisch steuerbare Wegeventil 18 zunächst den in der Fig. 1 gezeigten ersten Schaltzustand ein.

Darüber hinaus nehmen die elektrisch steuerbaren Wegeventile 24a bis 24d den in der Fig. 1 gezeigten Grundzustand ein. Der Druckluftbehälter 4 ist dann über die erste Druckluftleitung 12 und über die zweite Druckluftleitung 16 mit dem Punkt 22 verbunden, so dass dann ein Druckausgleich zwischen dem Druckluftbehälter 4 und dem Punkt 22 stattfindet, wenn der Druck in dem Druckluftbehälter 4 größer ist als am Punkt 22. Danach werden die steuerbaren Wegeventile 14 und 18 in den zweiten Schaltzustand überführt.

Der Punkt 22 ist dann über die dritte Druckluftleitung 20 und über die vierte Druckluftleitung 26 mit dem Druckluftbehälter 4 verbunden, so dass dann ein Druckausgleich zwischen dem Druckluftbehälter 4 und dem Punkt 22 stattfindet, wenn der Druck in dem Druckluftbehälter 4 kleiner ist als im Punkt 22. Wenn die Wegeventile 14 und 18 vor der Druckmessung, also durch die Steuereinrichtung, in beide Schaltzustände überführt werden, liegt im Punkt 22 auf jeden Fall der statische Luftdruck im Druckvorratbehälter 4 an und ist somit mit dem Drucksensor 30 messbar. Eine Messung des Luftdruckes im Druckluftbehälter 4 kann in regelmäßigen Abständen erfolgen und der gemessene Luftdruck kann in der Steuereinheit der Luftfederungsanlage gespeichert werden.

Im Folgenden wird beispielhaft an der Luftfeder 2a erläutert, wie mit Hilfe des Drucksensors 30 der Luftdruck in einer der Luftfedem 2a bis 2d messbar ist: Zunächst wird das zweite elektrisch steuerbare Wegeventil 18 von dem in der Fig. 1 gezeigten ersten Schaltzustand in seinen zweiten Schaltzustand überführt. In diesem Fall endet die zweite Druckluftleitung 16 in einer Sackgasse des zweiten steuerbaren Wegeventils 18 und die dritte Druckluftleitung 20 endet in einer Sackgasse des ersten steuerbaren Wegeventils 14. Danach wird das steuerbare Wegeventil 24a von seinem in der Fig. 1 gezeigten Grundzustand in den Schaltzustand überführt, so dass dann im Punkt 22 der statische Luftdruck der Luftfeder 2a anliegt und mit Hilfe des Drucksensors 30 messbar ist.

Soll Luft aus dem Druckluftbehälter 4 in eine Luftfedern 2a bis 2d - oder in die umgekehrte Richtung - gefördert werden, so kann dies unabhängig von den Druckverhältnissen, wie oben erläutert, bei laufendem Kompressor 6 erfolgen. Dies hat den Vorteil, dass auf den Drucksensor 30 verzichtet werden kann.

Alternativ ist es möglich, den in dem Druckluftbehälter 4 gemessenen Luftdruck mit dem unmittelbar vor dem Auffüllvorgang in der Luftfeder 2a bis 2d gemessenen Luftdruck zu vergleichen und den Kompressor 6 während des Befüllens der Luftfeder 2a bis 2d nur dann laufen zu lassen, wenn der Luftdruck in der Luftfeder 2a bis 2d kleiner ist als im Druckluftbehälter 4. In analoger Art und Weise kann vorgegangen werden, wenn Druckluft von einer der Luftfedern 2a bis 2d in den Druckluftbehälter 4 gefördert werden soll. Dies hat den Vorteil, dass der Kompressor nur dann läuft, wenn es notwendig ist.

Die Luftfederungsanlage enthält zusätzlich zu den bisher genannten Bestandteilen einen Lufttrockner 32, der einerseits mit der Atmosphäre (externes Druckmittelreservoir) und andererseits über ein elektrisch steuerbares Wegeventil 34 mit dem Eingang 8 des Kompressors 6 verbindbar ist. Das Wegeventil 34 befindet sich üblicherweise in dem in der Fig. 1 gezeigten Grundzustand, so dass die Verbindung des Lufttrockners 32 zum Eingang 8 des Kompressors 6 unterbrochen ist. Mit Hilfe des Kompressors 6 kann wie folgt Luft aus der Atmosphäre in den Druckluftbehälter 4 befördert werden: zunächst werden die Steuereingänge der elektrisch steuerbaren Wegeventile 34 und 18 bestromt, so dass diese von dem in der Fig. 1 gezeigten Zustands in ihren anderen Schaltzustand übergehen. In diesem Fall ist der Eingang des Kompressors 6 über den Lufttrockner 32 mit der Atmosphäre und der Ausgang 10 des Kompressors 6 über das Wegeventil 18 und die vierte Druckluftleitung 26 mit dem Druckluftbehälter 4 verbunden. Danach wird ein Steuersignal auf den Kompressor 6 gegeben, so dass dieser beginnt, Druckluft vom Eingang 8 zum Ausgang 10, d. h. von der Atmosphäre in den Druckluftbehälter 4 zu fördern. Soll keine weitere Druckluft von der Atmosphäre in den Druckbehälter 4 gefördert werden, so wird ein weiteres Signal auf den Kompressor 6 gegeben, so dass dieser aufhört zu laufen. Darüber hinaus werden die Steuereingänge der steuerbaren Wegeventile 18 und 34 nicht mehr bestromt, so dass diese wieder in den in der Fig. 1 gezeigten Zustand übergehen.

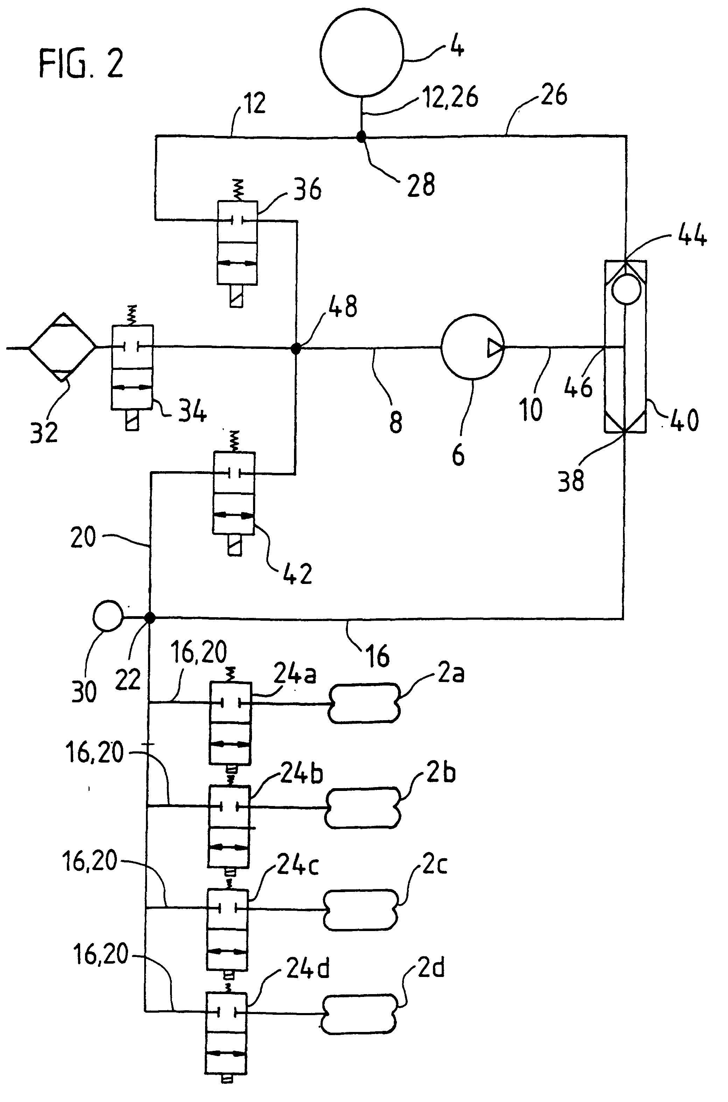

Fig. 2 zeigt ebenfalls eine geschlossene Niveauregelanlage in Form einer Luftfederungsanlage in schematischer Darstellung. Von dem Druckluftbehälter 4 geht eine erste Druckleitung 12 aus, die über ein erstes elektrisch steuerbares 2/2-Wegeventil 36 im Punkt 48 mit dem Eingangsleitung 8 des Kompressors 6 verbindbar ist. Von jeder Luftfeder 2a bis 2d geht eine zweite Druckluftleitung 16 aus, die auf einen ersten Eingang 38 eines Wechselventils 40 führt. Über das Wechselventil 40 also ist jede Luftfeder 2a bis 2d mit dem Ausgang 10 des Kompressors 6 verbindbar.

Von jeder Luftfeder 2a bis 2d geht eine dritte Druckluftleitung 20 aus, die über ein zweites elektrisch steuerbares 2/2-Wegeventil 42 im Punkt 48 mit dem Eingangsleitung 8 des Kompressors 6 verbindbar ist. Schließlich geht von dem Druckluftbehälter 4 eine vierte Druckluftleitung 26 aus, die über einen zweiten Eingang 44 des Wechselventils 40 mit dem Ausgang 10 des Kompressors 6 verbindbar ist. Der Ausgang 10 des Kompressors 6 ist mit dem Ausgang 46 des Wechselventils 40 verbunden, um, je nach Stellung des Wechselventils die zweite Druckluftleitung 16 bzw. die vierte Druckluftleitung 26 mit dem Ausgang 10 des Kompressors 6 zu verbinden.

Über die bisher genannten Bestandteile verfügt die Luftfederungsanlage über einen Drucksensor 30, mit dessen Hilfe der Luftdruck im Punkt 22 messbar ist, in dem die zweite Druckluftleitung 16 und die dritte Druckluftleitung 20 zusammengeführt werden. Im Folgenden wird zunächst erläutert, wie beispielsweise der Luftdruck im Druckluftbehälter 4 messbar ist: zunächst wird das erste elektrisch steuerbare Wegeventil 36 und das zweite steuerbare Wegeventil 42 durch Bestromung ihrer Steuereingänge von dem in der Fig. 2 gezeigten Grundzustand in den Schaltzustand überführt. Der Luftdruck in dem Druckluftbehälter 4 liegt dann über die erste Druckluftleitung 12 und die dritte Druckluftleitung 20, die im Punkt 48 miteinander verbunden sind, in dem Punkt 22 an und kann mit Hilfe des Drucksensors 30 gemessen werden.

Anhand der Luftfeder 2a wird beispielhaft erläutert, wie mit Hilfe des Drucksensors 30 der Luftdruck in einer der Luftfedem 2a bis 2d messbar ist: zunächst wird das steuerbare Wegeventil 24a von dem in der Fig. 2 gezeigten Grundzustand durch Bestromung seines Steuereinganges in den Schaltzustand überführt. Die beiden steuerbaren Wegeventile 36 und 42 verbleiben in dem in der Fig. 2 gezeigten Grundzustand. In diesem Fall liegt in dem Punkt 22 der statische Luftdruck in der Luftfeder 2a an und kann mit Hilfe des Drucksensors 30 gemessen werden. Ist dies geschehen, so wird der Steuereingang des steuerbaren Wegeventils 24a nicht mehr bestromt, so dass es wieder in der Fig.2 gezeigten Grundzustand übergeht.

Wenn eine Druckmessung ergeben hat, dass der Luftdruck in dem Druckluftbehälter 4 größer ist als der Luftdruck in der Luftfeder 2a, kann wie folgt Druckluft vom Druckluftbehälter 4 in die Luftfeder 2a gefördert werden: Zunächst werden die Steuereingänge der elektrisch steuerbaren Wegeventile 36, 42 und 24a bestromt, so dass diese von dem in der Fig. 2 gezeigten Grundzustand in den Schaltzustand übergehen. Der Druckluftbehälter 4 ist dann über die erste Druckluftleitung 12 und die dritte Druckluftleitung 20 mit der Luftfeder 2a verbunden, so dass Luft aus dem Druckluftbehälter 4 in die Luftfeder 2a strömen kann. Soll der Auffüllvorgang beendet werden, so wird eine Bestromung der Steuereingänge der Wegeventile 36, 42 und 24a unterbunden, so dass diese wieder in den der Fig.2 Grundzustand übergehen. Entsprechend wird vorgegangen, wenn Druckluft aus der Luftfeder 2a in den Druckluftbehälter 4 gefördert werden soll und eine Druckmessung mit Hilfe des Drucksensors 30 ergeben hat, dass der Luftdruck in der Luftfeder 2a größer ist als im Druckluftbehälter 4. In keinem der beiden Fälle wird der Kompressor 6 durchströmt und braucht nicht zu laufen.

Die Luftfedern 2b bis 2d können entsprechend mit Hilfe des Druckluftspeichers 4 be- oder entlüftet werden, anstatt des Wegeventils 24a ist dann lediglich das entsprechende Wegeventil 24b bis 24d zu schalten.

Wenn Druckluft aus dem Druckluftbehälter 4 in die Luftfeder 2a gefördert werden soll und eine Druckmessung mit Hilfe des Drucksensors 30 ergeben hat, dass der Luftdruck im Druckluftbehälter 4 kleiner ist als in der Luftfeder 2, wird wie folgt vorgegangen: Zunächst wird der Steuereingang des ersten steuerbaren Wegeventils 36 und des steuerbaren Wegeventils 24a bestromt, so dass diese Ventile von dem in der Fig. 2 gezeigten Grundzustand in ihren Schaltzustand übergehen. Da der Luftdruck in der Luftfeder 2a größer ist als der Luftdruck in dem Druckluftbehälter 4, liegt am ersten Eingang 38 des Wechselventils 40 ein größerer Luftdruck an als am zweiten Eingang 44 des Wechselventils 40. Aus diesem Grunde nimmt das Wechselventil 40 den in der Fig. 2 gezeigten Schaltzustand ein. Der Druckluftbehälter 4 ist dann über die erste Druckluftleitung 12, den Kompressor 6, über das Wechselventil 40 und die zweite Druckluftleitung 16 mit der Luftfeder 2a verbunden. Es wird dann ein elektrisches Signal zu dem Kompressor 6 geführt, so dass dieser beginnt, Druckluft vom Eingang 8 zum Ausgang 10 und damit vom Druckluftbehälter 4 in die Luftfeder 2a zu fördern. Soll der Auffüllvorgang der Luftfeder abgebrochen werden, so werden die Steuereingänge der Ventile 36 und 24a nicht mehr bestromt, so dass diese wieder in den in der Fig. 2 gezeigten Grundzustand übergehen.

Auf entsprechende Art und Weise können die Luftfedern 2b bis 2d aufgefüllt werden, anstatt des Wegeventils 24a ist dann lediglich das entsprechende Wegeventil 24a bis 24d zu schalten.

Im Folgenden wird erläutert, wie Druckluft aus der Luftfeder 2a in den Druckluftbehälter 4 gefördert werden kann, wenn eine Druckmessung mit Hilfe des Drucksensors 30 ergeben hat, dass der Luftdruck in dem Druckluftbehälter 4 größer ist als in der Luftfeder 2a: Zunächst werden die Steuereingänge der elektrisch steuerbaren Wegeventile 24a und 42 bestromt, so dass diese von dem in der Fig.2 gezeigten Grundzustand in ihren Schaltzustand übergehen. Darüber hinaus liegt an dem zweiten Eingang 44 des Wechselventils 40 ein größerer Luftdruck an als an seinem ersten Eingang 38, so dass das Wechselventil 40 aus dem in der Fig. 2 gezeigten Zustand in den anderen Zustand übergeht. Danach wird ein elektrisches Signal auf den Kompressor 6 geführt, so dass dieser anfängt zu laufen und Druckluft von seinem Eingang 8 zu seinem Ausgang 10 und damit von der Luftfeder 2a in den Druckluftbehälter 4 zu fördern. Soll der Ablassvorgang beendet werden, so wird die Bestromung der Steuereingänge der Wegeventile 24a und 42 abgebrochen, so dass diese wieder von ihrem Schaltzustand in den in der Fig. 2 gezeigten Grundzustand übergehen. Darüber hinaus wird ein Signal auf den Kompressor 6 gegeben, so dass dieser aufhört zu fördern.

Auf entsprechende Art und Weise können die Luftfedern 2b bis 2d aufgefüllt werden, anstatt des Wegeventils 24a ist dann lediglich das entsprechende Wegeventil 24a bis 24d zu schalten.

Über die bisher genannten Bestandteile hinaus verfügt die Luftfederungsanlage über einen Lufttrockner 32, der einerseits mit der Atmosphäre und andererseits über ein elektrisch steuerbares 2/2-Wegeventil 34 mit dem Eingang 8 des Kompressors 6 verbunden ist. Mit Hilfe des Kompressors 6 kann wie folgt Luft aus der Atmosphäre über den Lufttrockner 32 in den Druckluftbehälter 4 gefördert werden: zunächst werden die Steuereingänge der elektrisch steuerbaren Wegeventile 34 und 42 bestromt, so dass diese von den in der Fig. 2 gezeigten Grundzustand in ihren Schaltzustand übergehen. Der erste Eingang 38 des Wechselventils 40 ist dann über die Wegeventile 42 und 34 und über den Lufttrockner 32 mit der Atmosphäre verbunden, so dass dort Atmosphärendruck anliegt. Da der Luftdruck im Druckluftbehälter 4 im Allgemeinen größer ist als der Atmosphärendruck, geht das Wechselventil 40 von dem in Fig. 2 gezeigten Zustand in seinem anderen Zustand über, so dass der Ausgang 10 des Kompressors 6 über das Wechselventil 40 und die vierte Druckluftleitung 26 mit dem Druckluftbehälter 4 verbunden ist. Danach wird ein Signal auf den Kompressor 6 gegeben, so dass dieser Druckluft vom Eingang 8 zum Ausgang 10 und damit aus der Atmosphäre in den Druckluftbehälter 4 zu fördert. Soll der Fördervorgang beendet werden, so wird ein Signal zu dem Kompressor 6 geführt, so dass dieser stoppt. Darüber hinaus werden die Steuereingänge der Ventile 34 und 42 nicht mehr bestromt, so dass diese vom Schaltzustand wieder in den in der Fig. 2 gezeigten Grundzustand übergehen.

### Bezugszeichenliste

- 2a, ..., 2d: Luftfeder
- 4: Druckluftbehälter
- 6: Kompressor
- 8: Eingang des Kompressors
- 10: Ausgang des Kompressors
- 12: erste Druckluftleitung
- 14: erstes steuerbares Wegeventil
- 16: zweite Druckluftleitung
- 18: zweites steuerbares Wegeventil
- 20: dritte Druckluftleitung
- 22: Punkt
- 24a, ..., 24d: steuerbare Wegeventile
- 26: vierte Druckluftleitung
- 28: Punkte
- 30: Drucksensor
- 32: Lufttrockner
- 34: steuerbares Wegeventil
- 36: erstes steuerbares Wegeventil
- 38: erster Eingang des Wechselventils
- 40: Wechselventil
- 42: zweites steuerbares Wegeventil
- 44: zweiter Eingang des Wechselventils
- 46: Ausgang des Wechselventils
- 48: Punkt

## Patentansprüche

1. Geschlossene Niveauregeleinrichtung für Fahrzeuge mit Druckmittelkammern (2a bis 2d), durch die ein Fahrzeugaufbau gegenüber mindestens einer Fahrzeugachse abgefedert ist, die folgende Bestandteile enthält:
- einen Druckmittelvorratbehälter (4)
- Druckmittelkammern (2a bis 2d), von denen jede mit dem Druckmittelvorratbehälter (4) derart in Wirkverbindung steht, dass Druckmittel aus dem Druckmittelvorratbehälter (4) in die Druckmittelkammer (2a bis 2d) oder Druckmittel aus der Druckmittelkammer (2a bis 2d) in den Druckmittelvorratbehälter (4) überführbar ist
- eine Pumpe (6), mit der Druckmittel aus dem Druckmittelvorratbehälter (4) in jede Druckmittelkammer (2a bis 2d) oder aus jeder Druckmittelkammer (2a bis 2d) in den Druckmittelvorratbehälter (4) überführbar ist, wobei
- die Pumpe (6) einen Eingang (8) und einen Ausgang (10) aufweist und derartig ausgebildet ist, dass sie Druckmittel zumindest vom Eingang (8) zum Ausgang (10) befördern kann, und dass
- eine von dem Druckmittelvorratbehälter (4) ausgehende Druckmittelleitung (12) über ein steuerbares Wegeventil (14) mit dem Eingang (8) und eine von der Druckmittelkammer (2a bis 2d) ausgehende Druckmittelleitung (16) über ein steuerbares Wegeventil (18) mit dem Ausgang (10) der Pumpe (6) zumindest dann verbunden ist, wenn Druckmittel aus dem Druckmittelvorratbehälter (4) mittels der Pumpe (6) in die Druckmittelkammer (2a bis 2d) überführt werden soll, und dass
- eine von der Druckmittelkammer (2a bis 2d) ausgehende Druckmittelleitung (20) über ein steuerbares Wegeventil (14) mit dem Eingang (8) und eine von dem Druckmittelvorratbehälter (4) ausgehende Druckmittelleitung (26) über ein steuerbares Wegeventil (18) mit dem Ausgang (10) der Pumpe (6) zumindest dann verbunden ist, wenn Druckmittel aus der Druckmittelkammer (2a bis 2d) mittels der Pumpe (6) in den Druckmittelvorratbehälter (4) überführt werden soll,
**dadurch gekennzeichnet, dass**
die Niveauregeleinrichtung einen einzigen Drucksensor (30) aufweist, der in einer der von den Druckmittelkammern (2a bis 2d) ausgehenden Druckmittelleitungen (16, 20) angeordnet ist, welche über steuerbare Wegeventile (14, 18, 36, 42) mit den von dem Druckmittelvorratsbehälter (4) ausgehenden Druckmittelleitungen (12, 26) in Verbindung stehen, und dass sich zwischen jeder Druckmittelkammer (2a bis 2d) und dem Drucksensor (30) jeweils ein steuerbares Wegeventil (24a bis 24d) und zwischen dem Druckmittelvorratsbehälter (4) und dem Drucksensor (30) mindestens ein steuerbares Wegeventil (14, 18, 36, 42) befindet, welches jeweils in einem ersten Schaltzustand die jeweilige Druckmittelkammer (2a bis 2d) bzw. den Druckmittelvorratsbehälter (4) vom Drucksensor (30) trennt und in einem zweiten Schaltzustand die jeweilige Druckmittelkammer bzw. den Druckmittelvorratsbehälter (4) mit dem Drucksensor (30) verbindet, wobei mit dem Drucksensor (30) der Druck in den Druckmittelkammern (2a bis 2d) und in dem Druckmittelvorratsbehälter (4) gemessen wird, und die gemessenen Druckwerte zur Beurteilung herangezogen werden, ob bei der Förderung von Druckmittel aus dem Druckmittelvorratsbehälter (4) in eine Druckmittelkammer (2a bis 2d) oder umgekehrt die Pumpe (6) fördern muss, was dann notwendig ist, wenn in der gewünschten Strömungsrichtung des Druckmittels kein Druckgefälle vorliegt.

2. Geschlossene Niveauregeleinrichtung nach Anspruch 1, **dadurch gekennzeichnet, dass**
- die Niveauregeleinreichtung zumindest zwei steuerbare Wegeventile (14 und 18) aufweist, von denen jedes zumindest zwei Schaltzustände einnehmen kann, und dass
- eine von dem Druckmittelvorratbehälter (4) ausgehende Druckmittelleitung (12) über das erste steuerbare Wegeventil (14) mit dem Eingang (8) und eine von der Druckmittelkammer (2a bis 2d) ausgehende Druckmittelleitung (16) über das zweite steuerbare Wegeventil (18) mit dem Ausgang (10) der Pumpe (6) zumindest dann verbunden ist, wenn Druckmittel aus dem Druckmittelvorratbehälter (4) mittels der Pumpe (6) in die Druckmittelkammer (2a bis 2d) überführt werden soll, wobei beide steuerbaren Wegeventile (14 und 18) sich dann im ersten Schaltzustand befinden und dass
- eine von der Druckmittelkammer (2a bis 2d) ausgehende Druckmittelleitung (20) über das erste steuerbare Wegeventil (14) mit dem Eingang (8) und eine von dem Druckmittelvorratbehälter (2a bis 2d) ausgehende Druckmittelleitung (26) über das zweite steuerbare Wegeventil (18) mit dem Ausgang (10) der Pumpe (6) zumindest dann verbunden ist, wenn Druckmittel aus der Druckmittelkammer (2a bis 2d) mittels der Pumpe (6) in den Druckmittelvorratbehälter (4) überführt werden soll, wobei beide steuerbaren Wegeventile (14 und 18) sich dann im zweiten Schaltzustand befinden.

3. Geschlossene Niveauregeleinrichtung nach Anspruch 1, **dadurch gekennzeichnet, dass**
- die Niveauregeleinrichtung zumindest zwei steuerbare Wegeventile (36 und 42), von denen jedes einen Grundzustand und einen Schaltzustand einnehmen kann, und ein Wechselventil (40) aufweist, das zwei Zustände einnehmen kann, und dass
- eine von dem Druckmittelvorratbehälter (4) ausgehende Druckmittelleitung (12) über das erste steuerbare Wegeventil (36) mit dem Eingang (8) und eine von der Druckmittelkammer (2a bis 2d) ausgehende zweite Druckmittelleitung (16) über das Wechselventil (40) mit dem Ausgang (10) der Pumpe (6) zumindest dann verbunden ist, wenn Druckmittel aus dem Druckmittelvorratbehälter (4) mittels der Pumpe (6) in die Druckmittelkammer (2a bis 2d) überführt werden soll, wobei sich dann das erste steuerbare Wegeventil (36) im Sehaltzustand und das Wechselventil (40) im ersten Zustand befindet, und dass
- eine von der Druckmittelkammer (2a bis 2d) ausgehende Druckmittelleitung (20) über das zweite steuerbare Wegeventil (42) mit dem Eingang (8) und eine von dem Druckmittelvorratbehälter (4) ausgehende Druckmittelleitung (26) über das Wechselventil (4) mit dem Ausgang (10) der Pumpe (6) zumindest dann verbunden ist, wenn Druckmittel aus der Druckmittelkammer (2a bis 2d) mittels der Pumpe (6) in den Druckmittelvorratbehälter (4) überführt werden soll, wobei sich dann das zweite steuerbare Wegeventil (42) im Schaltzustand und das Wechselventil (40) im zweiten Zustand befindet.

4. Geschlossene Niveauregeleinrichtung nach Anspruch 3, **dadurch gekennzeichnet, dass** die von dem Druckmittelvorratbehälter (4) ausgehende Druckmittelleitung (12), die mit dem Eingang (8) der Pumpe (6) verbindbar ist, direkt mit der von der Druckmittelkammer (2a bis 2d) ausgehende Druckmittelleitung (20), die mit dem Eingang (8) der Pumpe (6) verbindbar ist, verbunden ist, wenn sich beide steuerbaren Wegeventile (36 und 42) gleichzeitig im Schaltzustand befinden.

5. Geschlossene Niveauregeleinrichtung nach einem der Ansprüche 1 bis 4, **dadurch gekennzeichnet, dass** der Eingang (8) der Pumpe (6) über ein steuerbares Wegeventil (34) mit einem externen Druckmittelreservoir und eine von dem Druckmittelvorratbehälter (4) ausgehende Druckmittelleitung (26) mit dem Ausgang (10) der Pumpe (6) verbunden ist, wenn der Druckmittelvorratbehälter (4) aus dem externen Druckreservoir mittels der Pumpe (6) aufgefüllt wird.

6. Geschlossene Niveauregeleinrichtung nach einem der Ansprüche 1 bis 5, **dadurch gekennzeichnet, dass** die steuerbaren Wegeventile (14, 18, 34, 36, 42, 24a bis 24d) als elektrisch steuerbare Wegeventile ausgebildet sind.

## Claims

1. Closed level regulating arrangement for vehicles having pressure medium chambers (2a to 2d), by means of which a vehicle structure is spring-mounted relative to at least one vehicle axle, said arrangement having the following component parts:
- a pressure medium supply container (4),
- pressure medium chambers (2a to 2d), of which each is in operative connection with the pressure medium supply container (4) in such a manner that pressure medium is transferable from the pressure medium supply container (4) to the pressure medium chamber (2a to 2d), or in such a manner that pressure medium is transferable from the pressure medium chamber (2a to 2d) to the pressure medium supply container (4),
- a pump (6), by means of which pressure medium is transferable from the pressure medium supply container (4) to each pressure medium chamber (2a to 2d) or from each pressure medium chamber (2a to 2d) to the pressure medium supply container (4),
- the pump (6) including an inlet (8) and an outlet (10) and is configured in such a manner that it can convey pressure medium at least from the inlet (8) to the outlet (10), and in such a manner that
- a pressure medium line (12), extending from the pressure medium supply container (4), is connected to the inlet (8) of the pump (6) via a controllable directional valve (14), and a pressure medium line (16), extending from the pressure medium chamber (2a to 2d), is connected to the outlet (10) of the pump (6) via a controllable directional valve (18), at least when pressure medium is to be transferred from the pressure medium supply container (4) to the pressure medium chamber (2a to 2d) by means of the pump (6), and in such a manner that
- a pressure medium line (20), extending from the pressure medium chamber (2a to 2d), is connected to the inlet (8) of the pump (6) via a controllable directional valve (14), and a pressure medium line (26), extending from the pressure medium supply container (4), is connected to the outlet (10) of the pump (6) via a controllable directional valve (18), at least when pressure medium is to be transferred from the pressure medium chamber (2a to 2d) to the pressure medium supply container (4) by means of the pump (6),
**characterised in that** the level regulating arrangement includes a single pressure sensor (30), which is disposed in one of the pressure medium lines (16, 20) extending from the pressure medium chambers (2a to 2d), which lines communicate with the pressure medium lines (12, 26), extending from the pressure medium supply container (4), via controllable directional valves (14, 18, 36, 42), and **in that** a respective controllable directional valve (24a to 24d) is situated between each pressure medium chamber (2a to 2d) and the pressure sensor (30), and at least one controllable directional valve (14, 18, 36, 42) is situated between the pressure medium supply container (4) and the pressure sensor (30), which directional valve separates the respective pressure medium chamber (2a to 2d) or respectively the pressure medium supply container (4) from the pressure sensor (30) in a first switching state and connects the respective pressure medium chamber or respectively the pressure medium supply container (4) to the pressure sensor (30) in a second switching state, the pressure in the pressure medium chambers (2a to 2d) and in the pressure medium supply container (4) being measured by the pressure sensor (30), and the measured pressure values being used to judge whether the pump (6) has to assist in the conveyance of pressure medium from the pressure medium supply container (4) to a pressure medium chamber (2a to 2d), or vice versa, since such is necessary when there is no pressure gradient in the desired direction of flow of the pressure medium.

2. Closed level regulating arrangement according to claim 1, **characterised in that**
- the level regulating arrangement includes at least two controllable directional valves (14 and 18), of which each can assume at least two switching states, and **in that**
- a pressure medium line (12), extending from the pressure medium supply container (4), is connected to the inlet (8) of the pump (6) via the first controllable directional valve (14), and a pressure medium line (16), extending from the pressure medium chamber (2a to 2d), is connected to the outlet (10) of the pump (6) via the second controllable directional valve (18), at least when pressure medium is to be transferred from the pressure medium supply container (4) to the pressure medium chamber (2a to 2d) by means of the pump (6), both controllable directional valves (14 and 18) then being in the first switching state, and **in that**
- a pressure medium line (20), extending from the pressure medium chamber (2a to 2d), is connected to the inlet (8) of the pump (6) via the first controllable directional valve (14), and a pressure medium line (26), extending from the pressure medium supply container (4), is connected to the outlet (10) of the pump (6) via the second controllable directional valve (18), at least when pressure medium is to be transferred from the pressure medium chamber (2a to 2d) to the pressure medium supply container (4) by means of the pump (6), both controllable directional valves (14 and 18) then being in the second switching state.

3. Closed level regulating arrangement according to claim 1, **characterised in that**
- the level regulating arrangement includes at least two controllable directional valves (36 and 42), of which each can assume a basic state and a switching state, and a changeover valve (40), which can assume two states, and **in that**
- a pressure medium line (12), extending from the pressure medium supply container (4), is connected to the inlet (8) of the pump (6) via the first controllable directional valve (36), and a second pressure medium line (16), extending from the pressure medium chamber (2a to 2d), is connected to the outlet (10) of the pump (6) via the changeover valve (40), at least when pressure medium is to be transferred from the pressure medium supply container (4) to the pressure medium chamber (2a to 2d) by means of the pump (6), the first controllable directional valve (36) then being in the switching state, and the changeover valve (40) then being in the first state, and **in that**
- a pressure medium line (20), extending from the pressure medium chamber (2a to 2d), is connected to the inlet (8) of the pump (6) via the second controllable directional valve (42), and a pressure medium line (26), extending from the pressure medium supply container (4), is connected to the outlet (10) of the pump (6) via the changeover valve (40), at least when pressure medium is to be transferred from the pressure medium chamber (2a to 2d) to the pressure medium supply container (4) by means of the pump (6), the second controllable directional valve (42) then being in the switching state, and the changeover valve (40) then being in the second state.

4. Closed level regulating arrangement according to claim 3, **characterised in that** the pressure medium line (12), which extends from the pressure medium supply container (4) and is connectable to the inlet (8) of the pump (6), is connected directly to the pressure medium line (20), which extends from the pressure medium chamber (2a to 2d) and is connectable to the inlet (8) of the pump (6), when both controllable directional valves (36 and 42) are simultaneously in the switching state.

5. Closed level regulating arrangement according to one of claims 1 to 4, **characterised in that** the inlet (8) of the pump (6) is connected to an external pressure medium reservoir via a controllable directional valve (34), and a pressure medium line (26), extending from the pressure medium supply container (4), is connected to the outlet (10) of the pump (6), when the pressure medium supply container (4) is filled from the external pressure reservoir by means of the pump (6).

6. Closed level regulating arrangement according to one of claims 1 to 5, **characterised in that** the controllable directional valves (14, 18, 34, 36, 42, 24a to 24d) are in the form of electrically controllable directional valves.

## Revendications

1. Dispositif fermé de réglage de niveau pour des véhicules équipés de chambres à milieu sous pression (2a à 2d) au moyen desquelles une structure de véhicule est suspendue élastiquement par rapport à au moins un essieu de véhicule, lequel dispositif comprend les composants suivants :
- un réservoir à milieu sous pression (4),
- des chambres à milieu sous pression (2a à 2d) dont chacune est reliée de façon active au réservoir à milieu sous pression (4), de manière telle que du milieu sous pression peut être transporté, sortant du réservoir à milieu sous pression (4) et entrant dans la chambre à milieu sous pression (2a à 2d), ou bien le milieu sous pression peut être transporté, sortant de la chambre à milieu sous pression (2a à 2d) et entrant dans le réservoir à milieu sous pression (4),
- une pompe (6) avec laquelle du milieu sous pression peut être transporté, sortant du réservoir à milieu sous pression (4) et entrant dans chaque chambre à milieu sous pression (2a à 2d), ou bien sortant de chaque chambre à milieu sous pression (2a à 2d) et entrant dans le réservoir à milieu sous pression (4), où
la pompe (6) comprend une entrée (8) et une sortie (10) et est configurée de façon telle qu'elle puisse transporter le milieu sous pression au moins depuis l'entrée (8) jusqu'à la sortie (10), et que
une conduite de milieu sous pression (12) sortant du réservoir à milieu sous pression (4) soit reliée à l'entrée (8) via un distributeur commandé (14), et une conduite de milieu sous pression (16) sortant de la chambre à milieu sous pression (2a à 2d) soit reliée à la sortie (10) de la pompe (6) via un distributeur commandé (18), au moins lorsque du milieu sous pression sortant du réservoir à milieu sous pression (4) doit être transporté dans la chambre à milieu sous pression (2a à 2d) au moyen de la pompe (6), et
une conduite de milieu sous pression (20) sortant de la chambre à milieu sous pression (2a à 2d) soit reliée à l'entrée (8) via un distributeur commandé (14), et une conduite de milieu sous pression (26) sortant du réservoir à milieu sous pression (4) soit alors au moins reliée à la sortie (10) de la pompe (6) via un distributeur commandé (18), lorsque le milieu sous pression sortant de la chambre à milieu sous pression (2a à 2d) doit être transporté dans le réservoir à milieu sous pression (4) au moyen de la pompe (6),
**caractérisé en ce que** le dispositif de réglage de niveau présente un seul capteur de pression (30) qui est disposé dans une des conduites de milieu sous pression (16, 20) sortant des chambres à milieu sous pression (2a à 2d), lesquelles conduites de milieu sous pression sont reliées aux conduites de milieu sous pression (12, 26) sortant du réservoir à milieu sous pression (4), via des distributeurs commandés (14, 18, 36, 42), et **en ce qu'**un distributeur commandé (24a à 24d) se trouve respectivement entre chaque chambre à milieu sous pression (2a à 2d) et le capteur de pression (30), et au moins un distributeur commandé (14, 18, 36, 42) se trouve entre le réservoir à milieu sous pression (4) et le capteur de pression (30), lequel distributeur commandé, dans un premier état de commande, sépare respectivement, du capteur de pression (30) la chambre à milieu sous pression respective (2a à 2d) ou le réservoir à milieu sous pression (4) et, dans un second état de commande, relie la chambre à milieu sous pression respective ou le réservoir à milieu sous pression (4) au capteur de pression (30), où la pression est mesurée, avec le capteur de pression (30), dans les chambres à milieu sous pression (2a à 2d) et dans le réservoir à milieu sous pression (4), et les valeurs de pression mesurées sont utilisées pour évaluer si la pompe (6), lors du transport du milieu sous pression sortant du réservoir à milieu sous pression (4) et entrant dans une chambre à milieu sous pression (2a à 2d), ou inversement, doit transporter ce qui est alors nécessaire si aucune chute de pression ne se produit dans le sens d'écoulement souhaité du milieu sous pression.

2. Dispositif fermé de réglage de niveau selon la revendication 1, **caractérisé**
- **en ce que** le dispositif de réglage de niveau comprend au moins deux distributeurs commandés (14 et 18) dont chacun peut prendre au moins deux états de commande, et
- **en ce qu'**une conduite de milieu sous pression (12) sortant du réservoir à milieu sous pression (4) est reliée à l'entrée (8) via le premier distributeur commandé (14), et une conduite de milieu sous pression (16) sortant de la chambre à milieu sous pression (2a à 2d) est reliée à la sortie (10) de la pompe (6) via le second distributeur commandé (18), lorsque le milieu sous pression sortant du réservoir à milieu sous pression (4) doit être transporté dans la chambre à milieu sous pression (2a à 2d) au moyen de la pompe (6), où les deux distributeurs commandés (14 et 18) se trouvent alors dans le premier état de commande, et
- **en ce qu'**une conduite de milieu sous pression (20) sortant de la chambre à milieu sous pression (2a à 2d) est reliée à l'entrée (8) via le premier distributeur commandé (14), et une conduite de milieu sous pression (26) sortant du réservoir à milieu sous pression (4) est reliée à la sortie (10) de la pompe (6) via le second distributeur commandé (18), au moins lorsque le milieu sous pression sortant de la chambre à milieu sous pression (2a à 2d) doit être transporté dans le réservoir à milieu sous pression (4) au moyen de la pompe (6), où les deux distributeurs commandés (14 et 18) se trouvent alors dans le second état de commande.

3. Dispositif fermé de réglage de niveau selon la revendication 1, **caractérisé**
- **en ce que** le dispositif de réglage de niveau comprend au moins deux distributeurs commandés (36 et 42), dont chacun peut prendre un état initial et un état de commande, et une soupape à deux voies (40) qui peut prendre deux états, et
- **en ce qu'**une conduite de milieu sous pression (12) sortant du réservoir à milieu sous pression (4) est reliée à l'entrée (8) via le premier distributeur commandé (36), et une seconde conduite de milieu sous pression (16) sortant de la chambre à milieu sous pression (2a à 2d) est alors au moins reliée à la sortie (10) de la pompe (6) via la soupape à deux voies (40), au moins lorsque le milieu sous pression sortant du réservoir à milieu sous pression (4) doit être transporté dans la chambre à milieu sous pression (2a à 2d) au moyen de la pompe (6), où le premier distributeur commandé (36) se trouve alors dans l'état de commande et, la soupape à deux voies (40) se trouve dans le premier état, et
- **en ce qu'**une conduite de milieu sous pression (20) sortant de la chambre à milieu sous pression (2a à 2d) est reliée à l'entrée (8) via le second distributeur commandé (42), et une conduite de milieu sous pression (26) sortant du réservoir à milieu sous pression (4) est reliée à la sortie (10) de la pompe (6) via la soupape à deux voies (40), lorsque le milieu sous pression sortant de la chambre à milieu sous pression (2a à 2d) doit être transporté dans le réservoir à milieu sous pression (4) au moyen de la pompe (6), où le second distributeur commandé (42) se trouve alors dans l'état de commande et, la soupape à deux voies (40) se trouve dans le second état.

4. Dispositif fermé de réglage de niveau selon la revendication 3, **caractérisé en ce que** la conduite de milieu sous pression (12) sortant du réservoir à milieu sous pression (4), qui peut être reliée à l'entrée (8) de la pompe (6), est reliée directement à la conduite de milieu sous pression (20) sortant de la chambre à milieu sous pression (2a à 2d), cette dernière conduite de milieu sous pression pouvant être reliée à l'entrée (8) de la pompe (6), lorsque les deux distributeurs commandés (36 et 42) se trouvent en même temps dans l'état de commande.

5. Dispositif fermé de réglage de niveau selon l'une quelconque des revendications 1 à 4, **caractérisé en ce que** l'entrée (8) de la pompe (6) est reliée à un réservoir extérieur de milieu sous pression via un distributeur commandé (34), et une conduite de milieu sous pression (26) sortant du réservoir à milieu sous pression (4) est reliée à la sortie (10) de la pompe (6), lorsque le réservoir à milieu sous pression (4) est rempli au moyen de la pompe (6), à partir du réservoir extérieur de milieu sous pression.

6. Dispositif fermé de réglage de niveau selon l'une quelconque des revendications 1 à 5, **caractérisé en ce que** les distributeurs commandés (14, 18, 34, 36, 42, 24a à 24d) sont conçus comme des distributeurs commandés électriquement.
